(19) **Europäisches Patentamt**
**European Patent Office**
**Office européen des brevets**

(11) **EP 2 410 144 B1**

(12) **EUROPEAN PATENT SPECIFICATION**

(45) Date of publication and mention
of the grant of the patent:
**27.03.2013 Bulletin 2013/13**

(51) Int Cl.:
*F01N 3/023* (2006.01)   *F01N 9/00* (2006.01)
*F01N 13/02* (2010.01)

(21) Application number: **10170039.1**

(22) Date of filing: **19.07.2010**

(54) **Method of Controlling NOx Emissions in an Internal Combustion Engine**

Verfahren zur Kontrolle von NOx-Emissionen in einem Verbrennungsmotor

Procédé de contrôle d'émissions NOx dans un moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(43) Date of publication of application:
**25.01.2012 Bulletin 2012/04**

(73) Proprietor: **Delphi Technologies Holding S.à.r.l.
4940 Bascharage (LU)**

(72) Inventors:
• **Parmentier, Michael
B-6747, CHATILLON (BE)**

• **Schmitt, Julien
57970, KUNTZIG (FR)**

(74) Representative: **Gregory, John David Charles
Delphi Diesel Systems
Patent Department
Courteney Road
Gillingham
Kent ME8 0RU (GB)**

(56) References cited:
**EP-A1- 2 128 393     EP-A2- 1 990 511**

EP 2 410 144 B1

**EP 2 410 144 B1**

**Description**

FIELD OF THE INVENTION

The present invention generally relates to internal combustion engines and more particularly to nitrogen oxides emission control in an engine equipped for exhaust after treatment.

BACKGROUND OF THE INVENTION

Modern internal combustion engines are featured with various exhaust after treatment devices to reduce the toxicity of emissions from the engine. Components typically used for treating the exhaust gas include:

- the catalytic converter to break down gaseous pollutants in the exhaust gas;

- the particulate filter (or soot filter) to remove the fine, solid particles in the exhaust gas (especially in diesel engines).

As it is well known, exhaust gas treatment in diesel engines (operating with excess air) is nowadays carried out by means of an oxidation-type catalytic converter (also called Diesel Oxidation Catalyst or DOC). The role of the DOC is thus to break down pollutants in the exhaust stream into less harmful component. More specifically, carbon monoxide (CO) and hydrocarbons (HC) are oxidized, as well as hydrocarbons that desorb from particulate matter (soot) and thus reduce particle mass. Furthermore, a proportion of nitrogen oxide (NO) contained in the exhaust stream is oxidized into nitrogen dioxide ($NO_2$).
Another, now conventional, exhaust after treatment device in diesel engines is the particulate filter (typically referred to as Diesel Particulate Filter), which is designed to remove diesel particulate matter or soot from the exhaust gas. While such devices can attain great efficiency rates, they require a regular monitoring of their operating status and periodical cleaning. Indeed, a growing amount of soot is deposits in the particulate filter and gradually increases the exhaust-gas backpressure. The particulate filter must therefore be regularly regenerated, which implies burning off the accumulated particulate matter.
In this connection, one can distinguish between so-called "active" or "passive" regeneration methods. Active regeneration involves injecting additional fuel to heat up (also assisted by the DOC) to soot combustion temperatures, i.e. about 550°C to 600°C.
Passive regeneration spontaneously occurs in engines featuring an oxidation catalyst upstream of the particulate filter. Indeed, an oxidation reaction occurs between $NO_2$ (mainly formed in the DOC) and soot, according to the formula:

$$2 NO_2 + C \rightarrow 2 NO + CO_2$$

Hence, contrary to active regeneration requiring a temperature of about 600°C for the combustion of soot, passive regeneration takes places at about 300°C through oxidation of soot by nitrogen dioxide, which has a powerful oxidizing ability.
However, the nitrogen oxides (NOx) are toxic and various measures are implemented in the engine to minimize $NO_x$ emissions, and mainly exhaust gas recirculation (EGR) in diesel engines. As a result, if the amount of NO discharged from the engine decreases, the $NO_2$ amount produced in the DOC will also typically decrease, making the passive regeneration insufficient for a proper regeneration of the particulate filter.
EP 2 128 393 discloses a method of regenerating a particulate filter, wherein the engine is temporarily controlled to discharge an increased amount of NOx and thus increase the amount of $NO_2$ formed in the DOC and supplied to the particulate filter in order to enhance its regeneration process. The controller may act i.a. on the EGR rate to increase the amount of NOx.
However, modifying the EGR rate has consequences on the amount of fresh air entering into the engine and significantly affects the temperature of the exhaust gases, which will also readily modify the operating temperatures of the exhaust after treatment devices.
EP 1 990 511 relates to a method of regenerating a particulate filter, wherein the EGR rate is varied to adjust the production of $NO_2$.

OBJECT OF THE INVENTION

The object of the present invention is to provide an improved way of controlling NOx emissions in an exhaust line equipped with an oxidation catalyst in view of temporarily promoting $NO_2$ generation.
This object is achieved by a method as claimed in claim 1.

SUMMARY OF THE INVENTION

The present invention derives from the observation that although reducing the EGR rate normally increases the engine NOx output, it may not necessarily lead to an increase in the production of $NO_2$.

The present inventors have in fact observed that the NO oxidation efficiency, i.e. the proportion of NO oxidized into $NO_2$ when the exhaust gas pass through the oxidation catalyst, not only depends on the temperature of the oxidation reaction but also on the exhaust flow rate through the oxidation catalyst.

Based on this assessment, the present inventors have developed a method of controlling NOx emissions in an internal combustion engine comprising oxidation-promoting catalyst means having a NO oxidation efficiency, whereby nitrogen oxide is oxidized into nitrogen dioxide. The engine is normally operated according to a calibrated table of exhaust gas recirculation (EGR) rates that may typically be designed for minimum NOx emissions. The method however also involves operating the engine, under predetermined engine operating conditions, into a $NO_2$-promoting mode so as to increase $NO_2$ generation for the purpose of improving the operation of an exhaust after treatment device downstream of the oxidation-promoting catalyst means.

According to the present invention, operating the engine in the $NO_2$-promoting mode comprises the steps of:

- determining whether operating the engine under a modified EGR rate would lead to an increased generation of $NO_2$, said determination taking into account the variability of the NO oxidation efficiency with the oxidation temperature and the exhaust flow rate; and

- using the modified EGR rate for engine control in case it leads to an increased $NO_2$ generation.

The present method thus provides a way of controlling NOx emissions wherein, when an increase in $NO_2$ is desired and the $NO_2$ promoting mode is entered, the consequence of a change in EGR rate (typically a decrease) on the NO oxidation efficiency is first simulated, and the modified EGR rate is then only implemented in case it modifies the generation of $NO_2$ in the expected way.

As it will appear to those skilled in the art, the implementation of the present method will in practice require a table representative of the NO conversion efficiency ($NO_2$/NOx ratio) in function of exhaust gas flow rate (mass or volume) and of the oxidation temperature, which may typically be represented by the exhaust gas temperature or the temperature of the oxidation catalyst means. Accordingly, the method may typically involve estimating a modified oxidation temperature and a modified exhaust flow rate under the candidate, modified EGR rate.

Regarding the determination of the candidate modified EGR rate to serve as a basis for the simulation compared to the normal, current flow rate, this modified EGR flow rate may be a constant value or may be a calibrated value mapped in respect of engine speed and load, or may be determined as a proportion of the normal, current EGR rate. While test with a constant value of 0% EGR (i.e. the EGR valve is closed) have proved satisfactory, those skilled in the art may devise any method of selecting the candidate, modified EGR value, with the desired complexity.

Depending on the application, it may be desired to simply vary the NO oxidation efficiency, i.e. the proportion or rate of $NO_2$ to NO, whereby this relationship is, as explained, directly dependent on the oxidation temperature and exhaust gas flow rate. In other applications, it is the absolute amount of $NO_2$ or the $NO_2$ concentration exiting the oxidation catalyst that matters. This can be determined by multiplying the NO conversion efficiency by the total NOx flow rate at the direct output of the engine block, the latter depending on EGR rate as already mentioned and can be measured, estimated or read from a table.

In one embodiment applied to regeneration of a particulate filter arranged in the exhaust system downstream of the oxidation catalyst, the predetermined engine operating condition for increasing the $NO_2$ production according to the present method may typically depend on the determined need for a regeneration operation. In such case, the Engine Control Unit implementing the present method will select a modified EGR rate and implement it if leads to an increase in the $NO_2$ concentration that arrives at the particulate filter, possibly an increase superior to a threshold value.

Clearly, the possibility to perform an efficient passive regeneration of the particle filter is of interest since it avoids the increased fuel injection required by active regeneration. Furthermore, some particulate filters, depending on the filter technology, may be relative sensitive to high temperatures at low flow conditions (when substantially clogged). In such case, an efficient passive regeneration process permits to at least partially unload the filter and a possible subsequent active regeneration process is thus less risky for the filter.

Preferably, the exhaust line comprises a NOx after treatment device arranged downstream of the particulate filter. This makes it easier to generate excess $NO_2$ for treating the particulate filter, as the $NO_x$ remaining downstream of the particulate filter can then be eliminated in the NOx after treatment device.

In such case however, one pre-requisite for operating in the $NO_2$-promoting mode is preferably that the NOx after treatment device is in an efficient operating status, i.e, which allows an efficient elimination of the NOx. In the case of a SCR catalyst device for example, one pre-requisite for entering the $NO_2$-promoting mode may be that the SCR catalyst is in a temperature range having a good conversion rate.

In another embodiment, the present method may be implemented to improve the operation of a NOx after treatment device or any other device located downstream of the oxidation catalyst means and the operation of which can be enhanced by operating with an increased $NO_2$ generation. This is for example the case of an exhaust system equipped with a SCR catalyst. Indeed, it is known that the NOx conversion efficiency in a SCR catalyst is better at high $NO_2$ to NOx proportions. In such case, the predetermined engine operating condition may be an identified need for a higher $NO_2$ proportion in the exhaust gas. When this criterion is met, the method will enter the $NO_2$-promoting mode and simulate the consequence of a change of EGR rate on the $NO_2$ to NOx ratio and apply it in case it would lead to an increase of the NO oxidation efficiency, possibly an increase superior to a threshold value.

In view of the above, and as it will be understood by those skilled in the art, various criteria may be used to trigger the $NO_2$-promoting mode. In particular, the $NO_2$-promoting mode may be performed when the ECU determines a need for an increase in NO oxidation efficiency or $NO_2$ concentration. This may be the case when a request for passive regeneration is active, and the need for such may be determined by any conventional method, such as e.g. a pressure drop across the particulate filter.

Preferably, the $NO_2$-promoting mode can only be performed while the NOx after treatment device is in a prescribed operating state, e.g. in a temperature range allowing a good conversion efficiency.

Termination of the $NO_2$-promoting mode may occur when an increased $NO_2$-production is no longer required, and the engine may thus be operated according to the mapped, normal EGR rates. This may be the case after successful, passive particulate filter regeneration. Other possible termination conditions may be that the NOx after treatment device no longer is in the prescribed operating state, or that it is determined that operating at the mapped, normal EGR rate would produce more $NO_2$ than at the modified EGR rate.

It remains to be noted that operation in the $NO_2$-promoting mode with the modified EGR rate may be completed by additional measures known to increase the $NO_2$ production, such as advancing the injection timing. Also, active regeneration may be performed if needed.

The present method is of particular application to diesel engines equipped with, in series, a diesel oxidation catalyst, a diesel particulate filter (possibly of the catalyst type - CDPF) and preferably with a downstream NOx after treatment device such as a SCR catalyst or NOx trap. The present method may however also be transposed for application to gasoline engines, and in particular to engines designed for gasoline direct injection (GDI) enabling lean burn combustion (stratified charge) which may also be featured with a particulate filter.

BRIEF DESCRIPTION OF THE DRAWINGS

The present invention will now be described, by way of example, with reference to the accompanying drawings, in which:

FIG. 1: is a principle diagram of a diesel engine with its intake and exhaust systems;

FIG. 2: is a graph illustrating the temperature and flow dependence of the NO conversion efficiency;

FIG. 3: is the same graph as in Fig.2, with an additional illustration of the simulation implemented by the present method;

FIG. 4: is a chart showing the effect of the present method;

FIG. 5: is a flow chart of a preferred embodiment of the present method.

DETAILED DESCRIPTION OF A PREFERRED EMBODIMENT

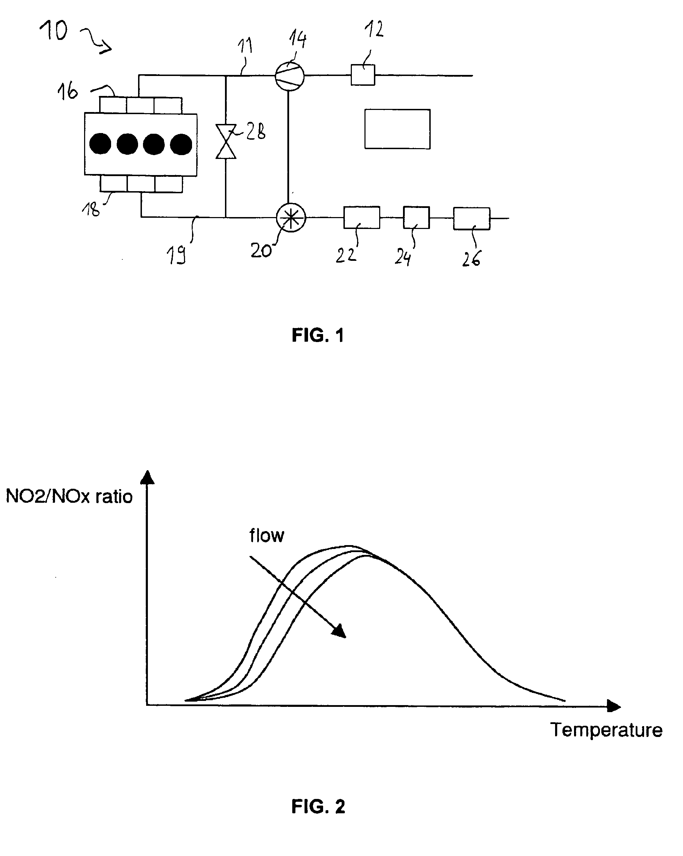

The present method will now be described with respect to a preferred embodiment applied to the regeneration of a diesel particulate filter in a diesel engine. In Fig.1, reference sign 10 indicates a diesel engine having an intake line 11 with an airflow meter 12 and a compressor 14 of a turbocharger and connecting to the engine block via an intake manifold 16. On the exhaust side of the engine, exhaust gases are collected by an exhaust manifold 18 and pass through the turbine 20 of the turbocharger before entering a series of exhaust after treatment devices to reduce pollutant emissions. Specifically, the exhaust line 19 comprises here: an oxidation-promoting catalytic device 22 (hereinafter Diesel Oxidation Catalyst - DOC) downstream of the turbine 20, followed by a particulate filter 24 (hereinafter Diesel Particulate Filter: DPF) and by a NOx after-treatment device 26 such as a Selective Catalytic Recovery device.

Reference sign 28 indicates an Exhaust Gas Recirculation valve (EGR valve) connecting the exhaust line 19 upstream of the turbine 20 with the intake line 11, downstream of the compressor 14. As it is known, such EGR valve is conventionally used in engine management to redirect a portion of exhaust gas to the intake side in order to reduce NOx emissions. Normal engine operation is thus conventionally performed using mapped EGR rates (in function of engine speed and load) calibrated for minimum NOx emissions.

The above exhaust after treatment devices are well known in the art and will therefore be herein only briefly described.

The DOC 22 is an oxidation promoting catalyst device that breaks down pollutants in the exhaust stream into less harmful components. More specifically, carbon monoxide (CO) and hydrocarbons (HC) are oxidized, as well as hydrocarbons that desorb from particulate matter (soot) and thus reduce the particle mass. Furthermore, a certain proportion of NO contained in the exhaust stream is oxidized into $NO_2$. The DOC 22 typically consists of a ceramic substrate structure, an oxidation mixture ("washcoat") and of the catalytically active precious metal such as platinum, palladium or rhodium.

The DPF 24 is designed to remove diesel particulate matter or soot from the exhaust gas. Current DPFs are based, .e.g., on a honeycomb filter structure made from silicon carbide or Cordierite with a large number of parallel channels; or on sintered metal filters comprising a metallic carrier structure composed of mesh filled with sintered metal powder. The DPF may alternatively be of the catalyzed-type, referred to as CDPF.

The SCR catalyst 26 removes nitrogen oxides (NOx) through a chemical reaction between the exhaust gases, a reducing agent, and a catalyst (e.g. vanadium based catalysts in heavy duty vehicles or Zeolite based catalysts on passenger cars). Urea-based SCR catalysts, for example, use gaseous ammonia as the active NOx reducing agent. Typically, an aqueous solution of urea, also known as carbamide $((NH_2)_2CO)$, is carried on board of the vehicle, and an injection system is used to supply it into the exhaust gas stream entering the SCR catalyst where it decomposes into gaseous ammonia (NH3) and is stored in the catalyst. The NOx contained in the engine exhaust gas entering the catalyst then reacts with the stored ammonia, which produces nitrogen and water. The amount of urea (reductant precursor) injected is normally controlled to provide the maximum NOx conversion efficiency. In this connection, it is worth noting that the NOx conversion efficiency depends on the temperature of the SCR catalyst device.

As it is well known, the growing amount of soot/particulate matter deposited in the DPF 24 gradually increases the exhaust back pressure. The DPF 24 must therefore be regularly regenerated, which implies burning off the soot that has collected. In passenger cars this is quite conventionally done by so-called "active regeneration", which involves raising the temperature of the exhaust gas and thus of the DPF 24 to about 550 to 600°C in order to oxidize the particulate matter with oxygen present in the exhaust gas.

By contrast, the principle of passive regeneration is based on combustion of soot with nitrogen dioxide ($NO_2$) at temperatures as low as 275°C, according to the equation:

$$2\,NO_2 + C \rightarrow CO_2 + 2\,NO$$

Such regeneration is interesting since it occurs at low temperature and does hence not require increased fuel injection as used for active regeneration. And it spontaneously occurs in vehicles equipped with an oxidation catalyst before the DPF, which oxidizes part of the NO exiting the engine into $NO_2$.

However, for low duty vehicles such as cars, the combustion is controlled to avoid NOx generation and thus the amount of NOx emitted is relatively low, and typically insufficient for a proper, complete regeneration of the DPF 24.

Accordingly, it has been proposed in the prior art, see e.g. EP 2 128 393, to temporarily increase the generation of $NO_2$ by adjusting engine parameters such as EGR rate, to allow a more efficient, passive regeneration of a DPF.

However, while reducing the EGR rate does indeed increase NOx generation, it also has a direct impact on exhaust flow rate and exhaust gas temperature and thus on the performance of the exhaust after treatment system, which is temperature senstitive.

The present method provides an improved way of enabling passive regeneration in an internal combustion engine. During the development of the present method, the generation of $NO_2$ in the oxidation catalyst has been closely studied.

Firstly, it is to be noted that the proportion of $NO_2$ to NO at the DOC outlet depends on the NO oxidation efficiency (proportion of NO oxidized into $NO_2$ in the catalyst), itself dependent on temperature. But the present inventors have further observed that the NO oxidation efficiency is also dependent on the exhaust flow rate, as illustrated in Fig. 2. As indicated by the arrow, the NO conversion efficiency at temperatures below the curve maximum (about 300°C), decreases as the exhaust flow rate increases.

The graph of Fig.2 shows that:

- depending on the temperature resulting from the change in EGR rate, the $NO_2$ ratio can increase or decrease, leading to favorable or unfavorable conditions for the passive regeneration of the DPF;

- the increase in the exhaust flow caused by a reduction of EGR rate may lead to excessive $NO_2$ reduction, leading

to unfavorable conditions for the passive DPF regeneration.

It shall thus be appreciated that, based on the above observations, the present inventors have developed a method of controlling NOx emissions in an engine that comprises a $NO_2$-promoting mode, wherein the consequences of a potential reduction in EGR rate on the $NO_2$ generation are first evaluated, and the modified EGR rate is then only adopted for engine control if it leads to a favourable modification of $NO_2$ production.

The determination of whether a change of EGR rate (reduction of EGR rate, i.e. less exhaust gas is sent to the intake side) is favorable or not to $NO_2$ production can be carried out as follows. As it has been understood, reducing the EGR rate will lead to an increase of exhaust flow and decrease of temperature. This can be described by 2 formulas based on 2 assumptions. In the following, "0" denotes the current operating conditions (typically the mapped EGR rate provided in the engine to minimize NOx emissions) and "1" the modified, reduced EGR conditions.

Assuming that the flow entering the cylinder stays constant (Air+EGR = constant), the flow after the change of EGR rate can be linked to the flow in the current conditions and EGR rates by:

$$\dot{m}_1 = \dot{m}_0 \cdot \frac{1 - egrrate_1}{1 - egrrate_0} \qquad (1)$$

where $\dot{m}_1$, and $\dot{m}_0$ are the exhaust mass flow rate in conditions 1 and 0, while $egrrate_0$ indicates the current EGR rate and $egrrate_1$ the candidate, modified EGR rate.

Assuming that the engine-out enthalpy (i.e. constant energy produced by the combustion) stays constant when the EGR rate is modified (constant engine efficiency), we have:

$$\dot{m}_0 \cdot cp_0 \cdot T_0 = \dot{m}_1 \cdot cp_1 \cdot T_1 \qquad (2)$$

where $T_0$ and $cp_0$ are the exhaust gas temperature and specific heat at the current EGR rate $egrrate_0$ and $T_1$ and $cp_1$ are the exhaust gas temperature and specific heat at the modified EGR rate $egrrate_1$.

Now combining equation (2) with (1) gives:

$$T_1 = T_0 \frac{cp_0}{cp_1} \cdot \frac{1 - egrrate_0}{1 - egrrate_1} \qquad (3)$$

and if $T_0$ is close to $T_1$, the $cp_i$ can be assumed to be constant. Equation (3) then becomes:

$$T_1 = T_0 \frac{1 - egrrate_0}{1 - egrrate_1} \qquad (4)$$

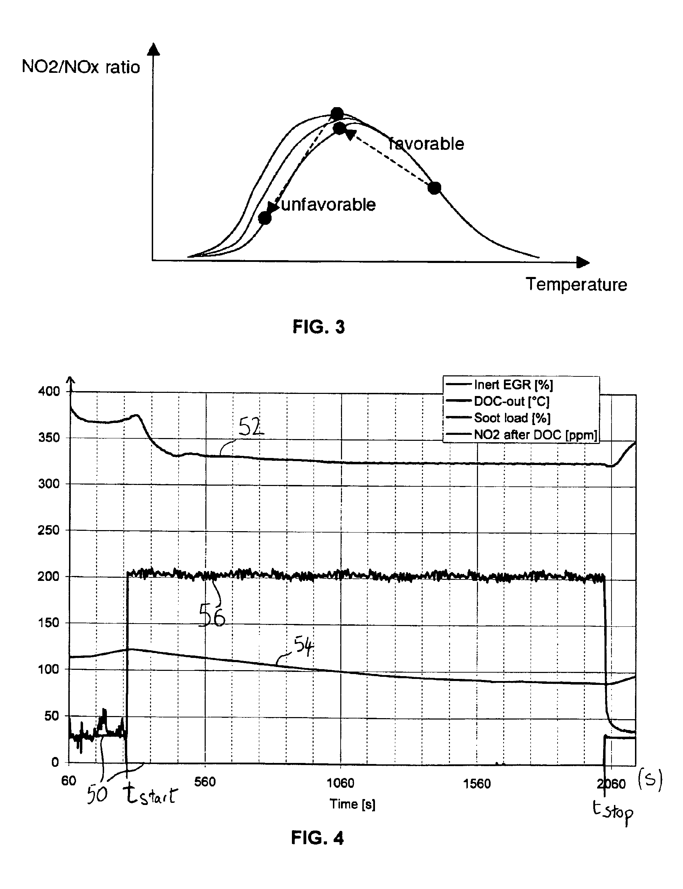

Hence, equations (4) and (1) give the temperature and flow of the conditions, which would be obtained from a change in EGR rate. As can be understood from Fig. 3, this flow and temperature can then be used to calculate the impact of a change of EGR rate on the $NO_2$ production. Point P1 represents the NO conversion efficiency at EGR rate E1 (condition "0"), with a current exhaust gas temperature T1 and exhaust flow rate $\dot{m}_1$. As can be seen, using the above equations allow determining, for a new, reduced EGR rate E2 (condition "1"), the modified exhaust Temperature T2 and flow rate $\dot{m}_2$, which gives the modified NO conversion efficiency P2. In this case the modification of the NO oxidation efficiency is favourable in terms of conversion efficiency.

By contrast, starting from a nearly maximum NO conversion efficiency P3 (at T3 and $\dot{m}_3$) at a current EGR rate E3, the reduction of the EGR rate to a value E4 would lead to operating values T4 and $\dot{m}_4$, which would induce a substantial reduction of the NO conversion efficiency at P4.

As for the passive regeneration of the DPF 24, the NO conversion efficiency is important but also the total amount of $NO_2$ produced, one shall thus take into account the NOx to EGR rate dependency. As it is known in the art, the total engine out NOx (i.e. directly at engine block outlet, before the exhaust after treatment systems) decreases as the EGR rate increases.

Hence, to obtain the total amount of $NO_2$ arriving at the DPF in the modified condition "1", one may multiply the calibrated engine-out NOx at the modified EGR rate "1" by the modified NO conversion efficiency of condition 1.

It may be noted that while $NO_2$ production is increased in the DOC and may appear unsuitable to meet NOx regulation requirements, the NOx after treatment device 26 downstream of the DPF will allow removal of NOx emissions. In the case of a SCR catalyst, the reductant consumption in the $NO_2$ promoting mode may simply be increased as compared to normal engine operation calibrated with EGR rates for minimized NOx generation.

Preferably, to allow substantial generation of NOx, the $NO_2$ promoting mode may be entered (and maintained) only if the SCR catalyts device is in an operating temperature range corresponding to a good NOx conversion efficiency allowing to substantial NOx elimination.

Regarding the determination of the candidate, modified EGR flow rate value $egrrate_1$ in equations (1) and (4) to serve as a basis for the simulation compared to the current, normal flow rate, this modified EGR flow rate may be a constant value or may be a calibrated value mapped in respect of engine speed and load, or may be determined as a proportion of the current, normal EGR rate. While tests with a constant value of 0% EGR (i.e. the EGR valve is closed) have proved satisfactory, those skilled in the art may devise any method of selecting the candidate, modified EGR value, with the desired complexity.

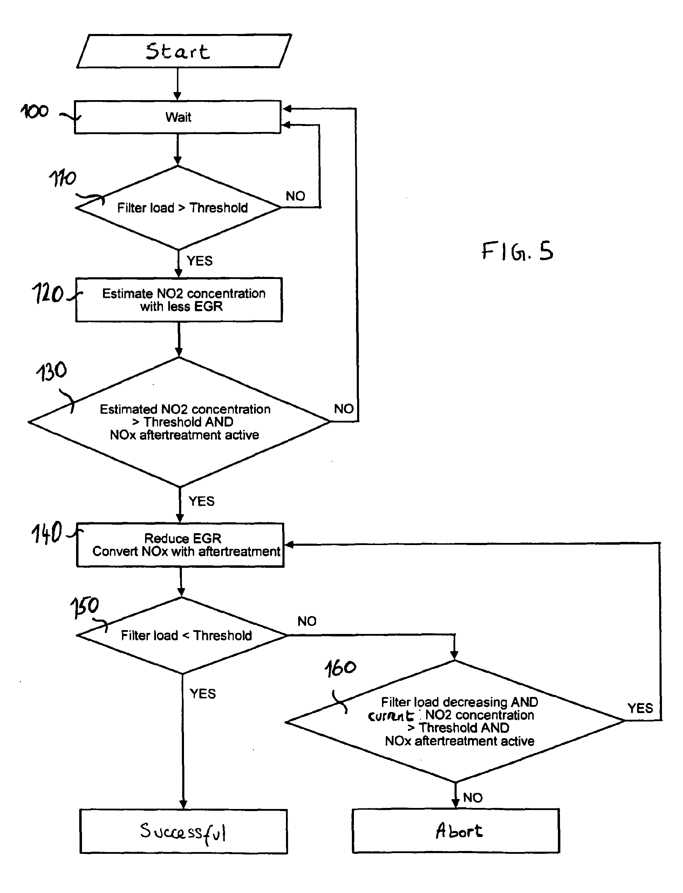

Referring now to Fig.5, there is shown a variant of the present method as used in a DPF regeneration strategy. As it will be understood from boxes 100 and 110, the system periodically checks for the current load of the DPF, which may be carried out by comparing a value indicative of the current filter load to a threshold value. This forms the entry condition (prerequisite) to start the $NO_2$ promoting mode, preferably together with the need for the SCR catalyst to be in the desired operating temperature range.

When the filter load exceeds the threshold at 110, the procedure moves to box 120 and the $NO_2$ concentration in the conditions of the modified, reduced EGR rate is estimated as explained above. This may involve estimating the oxidation temperature and mass flow rate at the modified EGR rate and then reading the NO oxidation efficiency and subsequently determining a projected $NO_2$ concentration. In case the estimated $NO_2$ concentration is superior to a threshold and preferably the SCR catalyst is in the efficient temperature range (indicated in decision box 130 by "NOx treatment active", the engine control unit sets the EGR valve to operate at the modified EGR rate and the NOx are converted downstream of the DPF by the SCR catalyst, as indicated in Box 140.

When operating at the modified EGR rate, it is then constantly checked whether the filter load drops below the filter load threshold. In the affirmative, the regeneration operation under the $NO_2$-promoting mode is considered successful and may be aborted to switch back the normal EGR rates.

In case the response to the test of box 150 is no, then it is checked whether: the filter load is decreasing; the current $NO_2$ concentration is superior to the threshold and the SCR catalyst is in the appropriate temperature range. In the affirmative, operation at the modified EGR rate is continued; otherwise the process is aborted.

For the test of box 160, the current $NO_2$ concentration may be determined based on the table mapping the NO oxidation effiency in function of oxidation temperature and exhaust flow and on the NOx output map (based on EGR rate).

**Example.**

Fig.4 shows a graph illustrating the evolution of various variables during operation under the present $NO_2$ promoting mode, and namely:

- the EGR rate (typically a percentage) indicated by line 50;

- the temperature of the exhaust gases at the DOC outlet (°C) indicated by line 52;

- the soot load indicated (typically a percentage) by line 54; and

- the $NO_2$ concentration (typically in ppm) at the DOC outlet.

The $NO_2$-promoting mode starts at $t_{start}$ and stops at $t_{stop}$. Before $t_{start}$ a certain percentage of exhaust gas is recirculated and the $NO_2$ output is quite low. When the $NO_2$-promoting mode is entered, the EGR rate is reduced to 0% (closed EGR valve) and the $NO_2$ concentration significantly increases. From that moment on, both the DOC-out temperature and DPF soot load start decreasing. The soot load continually decreases up to the moment when the $NO_2$-promoting mode is aborted at $t_{stop}$, whereby the normal EGR rate is then again implemented and the $NO_2$ concentration immediately decreases.

**Claims**

1. A method of controlling NOx emissions in an internal combustion engine comprising an exhaust system with oxidation-promoting catalyst means having a NO oxidation efficiency, wherein the engine is normally operated based on a map of normal EGR rates, and wherein the engine is operable in a $NO_2$-promoting mode,
**characterized in that** operating said engine in said $NO_2$-promoting mode comprises the steps of:

   - determining whether operating the engine under a modified EGR rate would lead to an increased generation of $NO_2$, said determination taking into account the variability of the NO oxidation efficiency with the oxidation temperature and the exhaust flow rate; and
   - using the modified EGR rate for engine control in case it leads to an increased $NO_2$ generation.

2. The method according to claim 1, wherein said determination step comprises estimating a modified temperature and modified flow rate under said modified EGR rate.

3. The method according to claim 1, wherein said determination step comprises:

   - reading a current EGR rate and determining a current NO conversion efficiency;
   - estimating a modified temperature and modified flow rate at said modified EGR rate;
   - determining a modified NO oxidation efficiency based on said estimated modified temperature and modified flow rate.

4. The method according to claim 3, wherein the modified EGR rate is adopted in case the modified NO oxidation efficiency is greater than the actual NO conversion efficiency.

5. The method according to any one of claims 1 to 3, wherein a modified $NO_2$ concentration at said modified EGR rate is estimated and the modified EGR rate is adopted in case the modified $NO_2$ concentration is greater than an actual $NO_2$ concentration or greater than a $NO_2$ threshold value.

6. The method according to any one of the preceding claims, wherein said $NO_2$-promoting mode is performed when at least one of the following conditions is satisfied:

   - a request for an increase in NO oxidation efficiency is active;
   - a request for an increase in $NO_2$ concentration is active;
   - a request for particulate filter regeneration is active.

7. The method according to any one of the preceding claims, wherein the modified EGR rate can only be implemented when a NOx after treatment device located downstream of the oxidation-promoting catalyst means is in a prescribed operating state.

8. The method according to the preceding claims, wherein said NOx after treatment device is a SCR catalyst device and said prescribed operating state is a prescribed temperature range of said SCR catalyst device.

9. The method according to any one of the preceding claims, wherein said modified EGR rate corresponds to a constant value, calibrated value, possibly depending on engine operating conditions, or a percentage of a mapped, normal EGR rate.

10. The method according to any one of the preceding claims, wherein said $NO_2$-promoting mode is terminated if it is determined that the NOx emissions cannot be substantially eliminated in a NOx after treatment device located downstream of the oxidation catalyst means.

11. The method according to any one of the preceding claims, wherein said $NO_2$-promoting mode is terminated if it is determined that operating at the mapped, normal EGR rate would produce more $NO_2$ than at the modified EGR rate.

**Patentansprüche**

1. Verfahren zur Regelung von $NO_x$-Emissionen in einer Verbrennungskraftmaschine, die eine Abgasanlage mit einer oxidationsfördernden Katalysatoreinrichtung aufweist, die einen NO-Oxidationswirkungsgrad hat, wobei der Motor normalerweise auf Basis eines Kennfelds normaler AGR-Raten betrieben wird und wobei der Motor in einem $NO_2$-fördernden Modus betrieben werden kann,

**dadurch gekennzeichnet, dass** der Betrieb des genannten Motors im genannten $NO_2$-fördernden Modus die folgenden Schritte umfasst:

- Ermitteln, ob der Betrieb des Motors unter einer modifizierten AGR-Rate zu einer erhöhten Erzeugung von $NO_2$ führen würde, wobei die genannte Ermittlung die Veränderlichkeit des NO-Oxidationswirkungsgrads im Verhältnis zu der Oxidationstemperatur und dem Abgasdurchfluss berücksichtigt, und
- in dem Fall, dass sie zu einer erhöhten $NO_2$-Erzeugung führt, Verwenden der modifizierten AGR-Rate zur Motorsteuerung.

2. Verfahren nach Anspruch 1, wobei der genannte Ermittlungsschritt das Schätzen einer modifizierten Temperatur und eines modifizierten Durchflusses unter der genannten modifizierten AGR-Rate umfasst.

3. Verfahren nach Anspruch 1, wobei der genannte Ermittlungsschritt Folgendes umfasst:

- Ablesen einer aktuellen AGR-Rate und Ermitteln eines aktuellen NO-Umsetzungswirkungsgrads,
- Schätzen einer modifizierten Temperatur und eines modifizierten Durchflusses bei der genannten modifizierten AGR-Rate,
- Ermitteln eines modifizierten NO-Oxidationswirkungsgrads auf Basis der genannten geschätzten modifizierten Temperatur und des genannten modifizierten Durchflusses.

4. Verfahren nach Anspruch 3, wobei die modifizierte AGR-Rate in dem Fall angewendet wird, dass der modifizierte NO-Oxidationswirkungsgrad größer ist als der tatsächliche NO-Umsetzungswirkungsgrad.

5. Verfahren nach einem der Ansprüche 1 bis 3, wobei eine modifizierte $NO_2$-Konzentration bei der genannten modifizierten AGR-Rate geschätzt wird und die modifizierte AGR-Rate in dem Fall angewendet wird, dass die modifizierte $NO_2$-Konzentration größer als eine tatsächliche $NO_2$-Konzentration oder größer als ein $NO_2$-Schwellenwert ist.

6. Verfahren nach einem der vorhergehenden Ansprüche, wobei der genannte $NO_2$-fördernde Modus durchgeführt wird, wenn wenigstens eine der folgenden Bedingungen erfüllt wird:

- eine Anforderung für eine Erhöhung des NO-Oxidationswirkungsgrads aktiv ist,
- eine Anforderung für eine Erhöhung der $NO_2$-Konzentration aktiv ist,
- eine Anforderung für eine Partikelfilterregeneration aktiv ist.

7. Verfahren nach einem der vorhergehenden Ansprüche, wobei die modifizierte AGR-Rate nur implementiert werden kann, wenn eine abströmseitig der oxidationsfördernden Katalysatoreinrichtung befindliche $NO_x$-Nachbehandlungsvorrichtung in einem vorgeschriebenen Betriebszustand ist.

8. Verfahren nach einem der vorhergehenden Ansprüche, wobei die genannte $NO_x$-Nachbehandlungsvorrichtung eine SCR-Katalysatorvorrichtung ist und der genannte vorgeschriebene Zustand ein vorgeschriebener Temperaturbereich der genannten SCR-Katalysatorvorrichtung ist.

9. Verfahren nach einem der vorhergehenden Ansprüche, wobei die genannte modifizierte AGR-Rate einem konstanten Wert, einem kalibrierten Wert, der möglicherweise von Motorbetriebsbedingungen abhängt, oder einem Anteil einer abgebildeten, normalen AGR-Rate entspricht.

10. Verfahren nach einem der vorhergehenden Ansprüche, wobei der genannte $NO_2$-fördernde Modus beendet wird, wenn ermittelt wird, dass die $NO_x$-Emissionen in einer abströmseitig der Oxidationskatalysatoreinrichtung befindlichen $NO_x$-Nachbehandlungsvorrichtung nicht erheblich eliminiert werden können.

11. Verfahren nach einem der vorhergehenden Ansprüche, wobei der genannte $NO_2$-fördernde Modus beendet wird, wenn ermittelt wird, dass der Betrieb mit der abgebildeten, normalen AGR-Rate mehr $NO_2$ erzeugen würde als mit der modifizierten AGR-Rate.

**Revendications**

1. Procédé pour contrôler les émissions de $NO_x$ dans un moteur à combustion interne comprenant un système d'échappement avec un moyen catalyseur promoteur d'oxydation ayant une efficacité d'oxydation du NO, dans lequel le moteur est amené normalement à fonctionner en se basant sur une cartographie de taux de EGR ("recirculation des gaz d'échappement") normaux, et dans lequel le moteur est capable de fonctionner dans un mode de promotion de $NO_2$, **caractérisé en ce que** le fonctionnement dudit moteur dans ledit mode de promotion de $NO_2$ comprend les étapes consistant à :

   - déterminer si le fonctionnement du moteur sous un taux de EGR modifié mènerait à une augmentation de la génération de $NO_2$, ladite détermination prenant en compte la variabilité de l'efficacité d'oxydation du NO avec la température d'oxydation et avec le débit d'échappement, et
   - utiliser le taux de EGR modifié pour le contrôle du moteur dans le cas où cela mène à une augmentation de la génération de $NO_2$.

2. Procédé selon la revendication 1, dans lequel ladite étape de détermination comprend d'estimer une température modifiée et un débit modifié sous ledit taux de EGR modifié.

3. Procédé selon la revendication 1, dans lequel ladite étape de détermination comprend :

   - la lecture d'un taux de EGR actuel et la détermination d'une efficacité de conversion de NO actuelle ;
   - l'estimation d'une température modifiée et d'un débit modifié audit taux de EGR modifié ;
   - la détermination d'une efficacité d'oxydation de NO modifiée en se basant sur ladite température modifiée estimée et ledit débit modifié estimé.

4. Procédé selon la revendication 3, dans lequel le taux de EGR modifié est adopté dans le cas où l'efficacité d'oxydation de NO modifiée est supérieure à l'efficacité de conversion de NO réelle.

5. Procédé selon l'une quelconque des revendications 1 à 3, dans lequel une concentration modifiée de $NO_2$ audit taux de EGR modifié est estimée et le taux de EGR modifié est adopté dans le cas où la concentration de $NO_2$ modifiée est supérieure à une concentration de $NO_2$ réelle ou supérieure à une valeur seuil de $NO_2$.

6. Procédé selon l'une quelconque des revendications précédentes, dans lequel ledit mode de promotion de $NO_2$ est exécuté lorsque l'une au moins des conditions suivantes est satisfaite :

   - une requête pour une augmentation de l'efficacité d'oxydation de NO est active ;
   - une requête pour une augmentation de concentration de $NO_2$ est active ;
   - une requête pour régénération du filtre à particules est active.

7. Procédé selon l'une quelconque des revendications précédentes, dans lequel le taux de EGR modifié peut être uniquement mis en oeuvre quand un dispositif de post-traitement de NOx situé en aval du moyen catalyseur de promotion d'oxydation est dans un état de fonctionnement prescrit.

8. Procédé selon le les revendications précédentes, dans lequel ledit dispositif de post-traitement de NOx est un dispositif catalyseur SCR, et ledit état de fonctionnement prescrit est une plage de température prescrite dudit dispositif catalyseur SCR.

9. Procédé selon l'une quelconque des revendications précédentes, dans lequel ledit taux de EGR modifié correspond à une valeur constante, une valeur calibrée, dépendant éventuellement des conditions de fonctionnement du moteur, ou un pourcentage d'un taux normal cartographié de EGR.

10. Procédé selon l'une quelconque des revendications précédentes, dans lequel ledit mode de promotion de $NO_2$ est terminé si l'on détermine que les émissions de NOx ne peuvent pas être sensiblement éliminées dans un dispositif de post-traitement de NOx situé en aval du moyen catalyseur d'oxydation.

11. Procédé selon l'une quelconque des revendications précédentes, dans lequel ledit mode de promotion de $NO_2$ est terminé si l'on détermine que le fonctionnement au taux normal cartographié de EGR produirait plus de $NO_2$ qu'au taux modifié de EGR.

**FIG. 1**

**FIG. 2**

**FIG. 3**

**FIG. 4**

Start

100 → Wait

110 → Filter load > Threshold — NO

YES

120 → Estimate NO2 concentration with less EGR

130 → Estimated NO2 concentration > Threshold AND NOx aftertreatment active — NO

YES

140 → Reduce EGR Convert NOx with aftertreatment

150 → Filter load < Threshold — NO

YES

160 → Filter load decreasing AND current NO2 concentration > Threshold AND NOx aftertreatment active — YES

NO

Successful

Abort

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2128393 A

- EP 1990511 A